# EUROPÄISCHE PATENTSCHRIFT

(11) **EP 0 944 799 B1**
(45) Veröffentlichungstag und Bekanntmachung des Hinweises auf die Patenterteilung: **12.12.2001**
(21) Anmeldenummer: 97947000.2
(22) Anmeldetag: 09.10.1997
(51) Int. Cl.: F21V 8/00

(54) **BELEUCHTUNGSEINHEIT**
LIGHTENING UNIT
UNITE D'ECLAIRAGE

(30) Priorität: 16.12.1996 DE 19652209
(43) Veröffentlichungstag der Anmeldung: 29.09.1999
(73) Patentinhaber: ROBERT BOSCH GMBH, 70442 Stuttgart (DE)
(72) Erfinder: WAGNER, Arndt, D-71229 Leonberg (DE); HAAS, Gunther, D-71229 Leonberg (DE)
(86) Internationale Anmeldenummer: DE9702307
(87) Internationale Veröffentlichungsnummer: WO9827382

(56) Entgegenhaltungen:
- EP-A- 0 544 332
- EP-A- 0 773 402
- DE-A- 4 008 953
- US-A- 4 673 254
- US-A- 5 390 276

## Beschreibung

### Stand der Technik

Die Erfindung geht aus von einer Beleuchtungseinheit nach der Gattung des unabhängigen Anspruchs.

Aus der US-Patentschrift US 5,390,276 ist schon eine Beleuchtungseinheit bekannt. Kernstück dieser Beleuchtungseinheit ist ein aus transparentem Material (beispielsweise Plexiglas) hergestellter Lichtleiter, der grob die Form einer quaderförmigen Platte besitzt. Eine der Stirnflächen wird als Lichteintrittsfläche benutzt, die übrigen Stirnflächen sind so behandelt, beispielsweise durch Verspiegelung, daß kein Licht aus ihnen aus dem Lichtleiter austreten kann. Eine der beiden großen Deckflächen ist als Lichtaustrittsfläche ausgebildet, auf der anderen großen Deckfläche sind kleine Prismen aufgebracht. Die Prismen weisen alle die gleiche Querschnittsform und Querschnittsfläche auf und verlaufen alle parallel zur Lichteintrittsfläche. In unmittelbarer Nachbarschaft der Lichteintrittsfläche befindet sich die Lampe. Als Lampe wird eine Kaltkathodenfluoreszenzlampe verwendet, die die Form einer länglichen Röhre aufweist. Die Lampe ist derart vor der Lichteintrittsöffnung angeordnet, daß ein möglichst großer Prozentsatz der von der Lampe erzeugten Lichtstrahlung in den Wellenleiter eingekoppelt wird. Zusätzlich ist auf der dem Wellenleiter abgewandten Seite der Lampe ein Reflektor vorgesehen, welcher das nicht direkt in den Wellenleiter eingestrahlte Licht ebenfalls dem Wellenleiter zuführt.

Durch die auf der Unterseite des Wellenleiters angeordneten Prismen ergibt sich eine besonders effiziente Auskopplung des Lichts, welches sich im Wellenleiter befindet, dadurch, daß das Licht von den auf der einen Deckfläche angebrachten Prismen zur gegenüberliegenden Deckfläche reflektiert wird, aus welcher es dann austreten kann. Allerdings gilt es bei dieser Anordnung zu berücksichtigen, daß die Auskopplungseffizienz im ganzen Wellenleiter gleich ist. Wird also die stabförmige Lampe beispielsweise durch eine L-förmige oder U-förmige Röhre ersetzt, und werden somit mehrere Stirnflächen als Lichteintrittsflächen benutzt, so ergibt sich eine inhomogene Verteilung der Lichtintensität im Wellenleiter. Bedingt durch die gleichmäßige Auskopplungseffizienz ergibt sich somit auch eine inhomogene Beleuchtung. Andererseits jedoch ist die Verwendung von L-oder U-förmigen Röhren erstrebenswert, da diese besonders effizient sind.

Ferner ist es aus der EP 0 544 332 A1 bekannt, lineare Lichtquellen an zwei gegenüberliegenden Seiten eines Lichtleiters anzuordnen und über Vertiefungen in dem Lichtleiter die Richtung der Totalreflexion an der Oberfläche des Lichtleiters zu verändern, um eine gleichmäßige Helligkeit zu erreichen. Aus der DE 40 08 953 A1 ist eine Lichtquelleneinrichtung bekannt, die als eine flache, ebene Lichtquelle einen gleichmäßig hohen Helligkeitspegel im gesamten Bereich des Anzeigepaneels gewährleistet. Hierbei ist es die zu einem Beobachter hin gerichteten Oberfläche des Lichtleitermaterials als eine gekrümmte Oberfläche ausgebildet. Weiterhin ist es aus der EP 0 773 402 A2 bekannt, eine Platte für eine Beleuchtungsvorrichtung mit reflektierenden Bereichen vorzusehen, wobei die Größe der reflektierenden Bereiche mit zunehmendem Abstand von der Lichtquelle zunimmt.

### Vorteile der Erfindung

Die erfindungsgemäße Beleuchtungseinheit mit den Merkmalen der unabhängigen Ansprüche hat demgegenüber den Vorteil, daß sie Licht hqher Intensität liefern kann, welches selbst mit L - oder U-förmigen Lichtquellen über eine extrem homogene Intensitätsverteilung verfügt. Dies ist beispielsweise beim Einbau in Flüssigkristallanzeigen für Kraftfahrzeuge von Vorteil.

Durch die in den abhängigen Ansprüchen aufgeführten Maßnahmen sind vorteilhafte Weiterbildungen und Verbesserungen der in den unabhängigen Ansprüchen angegebenen Beleuchtungseinheit möglich. So ist es besonders vorteilhaft, die Prismen mit derselben Querschnittsform zu versehen, da somit die Lichtintensität an allen Punkten die gleiche Abhängigkeit vom Blickwinkel aufweist.

### Zeichnung

Ausführungsbeispiele der Erfindung sind in der Zeichnung dargestellt und in der nachfolgenden Beschreibung näher erläutert. Es zeigen Figur 1 ein erstes Beleuchtungselement, Figur 2 ein zweites Beleuchtungselement, Figur 3 ein drittes Beleuchtungselement, Figur 4 ein viertes Beleuchtungselement und Figur 5 einen Spiegel für ein Beleuchtungselement.

### Beschreibung

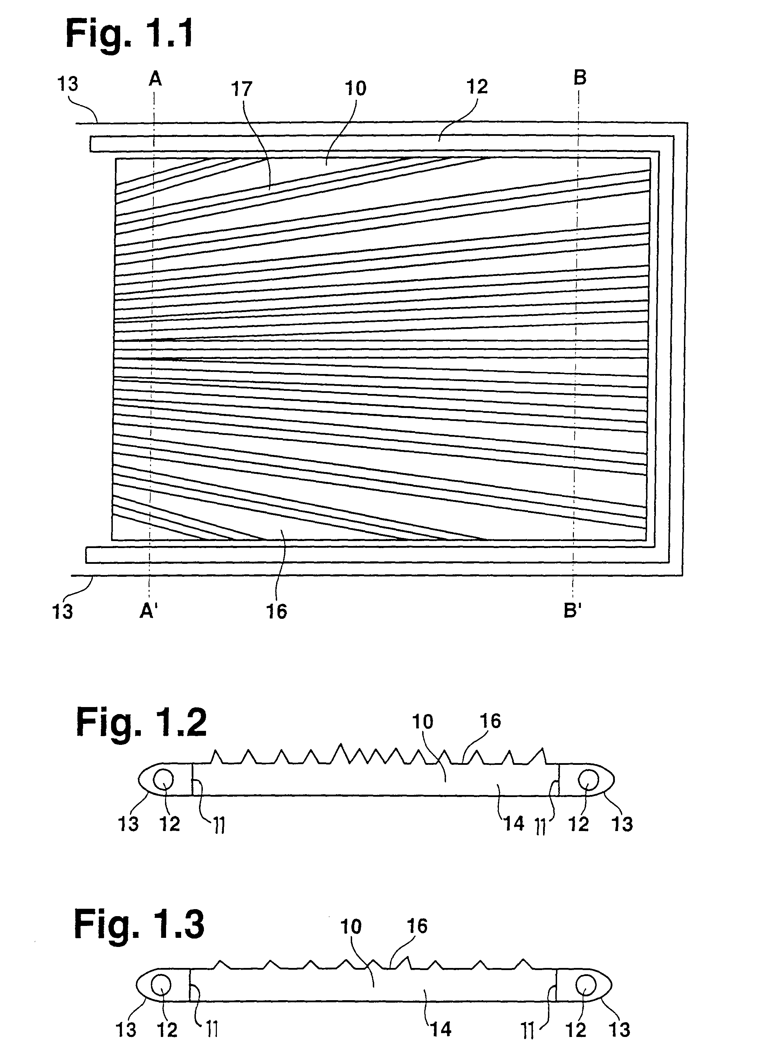

Figur 1.1 zeigt ein erstes Beleuchtungselement. Das Beleuchtungselement weist eine Wellenleiterplatte 10 auf, welche als etwa quaderförmige Platte aus Plexiglas ausgebildet ist. Es sind jedoch auch andere Materialien für die Wellenleiterplatte vorstellbar und vorgesehen, sofern sie die erforderliche hohe Transparenz aufweisen. Die Wellenleiterplatte 10 ist an drei ihrer Schmalseiten von einer U-förmigen Lichtquelle 12 umgeben. Die Lichtquelle wiederum wird von einem ebenfalls U-förmigen Reflektor 13 umfaßt. Die Wellenleiterplatte 10 weist auf ihrer Unterseite 16, welche in der hier gewählten Darstellung sichtbar sein soll, Prismen 17 auf. Die Prismen 17 verfügen alle über die gleiche Querschnittsform und gleiche Querschnittsabmessungen. Alle Prismen seien linear (das heißt die Firstlinien der Prismen sind Geraden). Die Anordnung der Prismen ist etwa sternförmig, wobei der Sternmittelpunkt auf der Mittelsenkrechten durch den mittleren Teil der U-förmigen Lichtquelle 12 liegt, weit außerhalb der Abmessungen der Wellenleiterplatte 10.

Ein erster Querschnitt durch die Figur 1.1 gezeigte Beleuchtungseinheit entlang der Schnittlinie AA', welche ebenfalls in Figur 1.1 gezeigt ist, ist in Figur 1.2 dargestellt, wobei gleiche Bestandteile mit gleichen Bezugszeichen gekennzeichnet wurden.

In Figur 1.3 ist ein weiterer Querschnitt durch die in Figur 1.1 dargestellte Beleuchtungseinheit wiedergegeben, in diesem Falle entlang der zweiten Schnittlinie BB'. Wiederum kennzeichnen gleiche Bezugszeichen gleiche Bestandteile.

Licht, welches von der Lichtquelle 12 ausgesandt wird, bewegt sich etwa parallel zur Lichtaustrittsfläche 14 in der Wellenleiterplatte 10. Trifft dieses Licht auf die Lichtaustrittsfläche, so wird es total reflektiert, tritt es auf der gegenüberliegenden Schmalseite aus, so wird es vom Reflektor 13 zurückreflektiert. Trifft dieses Licht jedoch auf eines der Prismen 17, so wird es abgelenkt und trifft somit unter einem Winkel auf die Lichtaustrittsfläche 14, welcher kleiner ist als der kritische Winkel für die Totalreflexion. Somit ist die Wahrscheinlichkeit für einen Lichtstrahl, ein Prisma 17 zu treffen, gleichfalls ein Maß für die Effizienz des Auskoppelns von Licht aus der Wellenleiterplatte 10. Die inhomogene Lichtintensitätsverteilung in der Wellenleiterplatte 10, bedingt durch die U-förmige Ausgestaltung der Lichtquelle 12, wird im hier gezeigten Ausführungsbeispiel dadurch kompensiert, daß die Auskopplungseffizienz in den Teilen der Wellenleiterplatte größer ist, wo die Lichtintensität kleiner ist.

Für die Erfindung soll es hierbei unwesentlich sein, daß diee Prismen linear sind. Insbesondere ist es auch vorstellbar und vorgesehen, daß die Firstlinien der Prismen in etwa den Gradienten der Lichtintensität in der Wellenleiterplatte folgen. Ebenso ist es vorstellbar und vorgesehen, daß die Prismen keine dreieckige Querschnittsform aufweisen. Insbesondere ist eine doppeltparabolische Querschnittsform vorteilhaft, da sie eine Kollimation des ausgekoppelten Lichts ermöglicht. Weitere Abwandlungsmöglichkeiten der erfindungsgemäßen Beleuchtungseinheit sind dadurch gegeben, daß die Inhomogenität der Beleuchtung nicht vollständig ausgeglichen wird, durch eine über die Abmessungen der Wellenleiter variierende Auskopplungseffizienz. Dies ist insbesondere dann erstrebenswert, wenn die Beleuchtungseinheit zur Beleuchtung einer Flüssigkristallanzeige benutzt wird, und die Flüssigkeitskristallanzeige nicht überall gleichermaßen lichtstark sein soll.

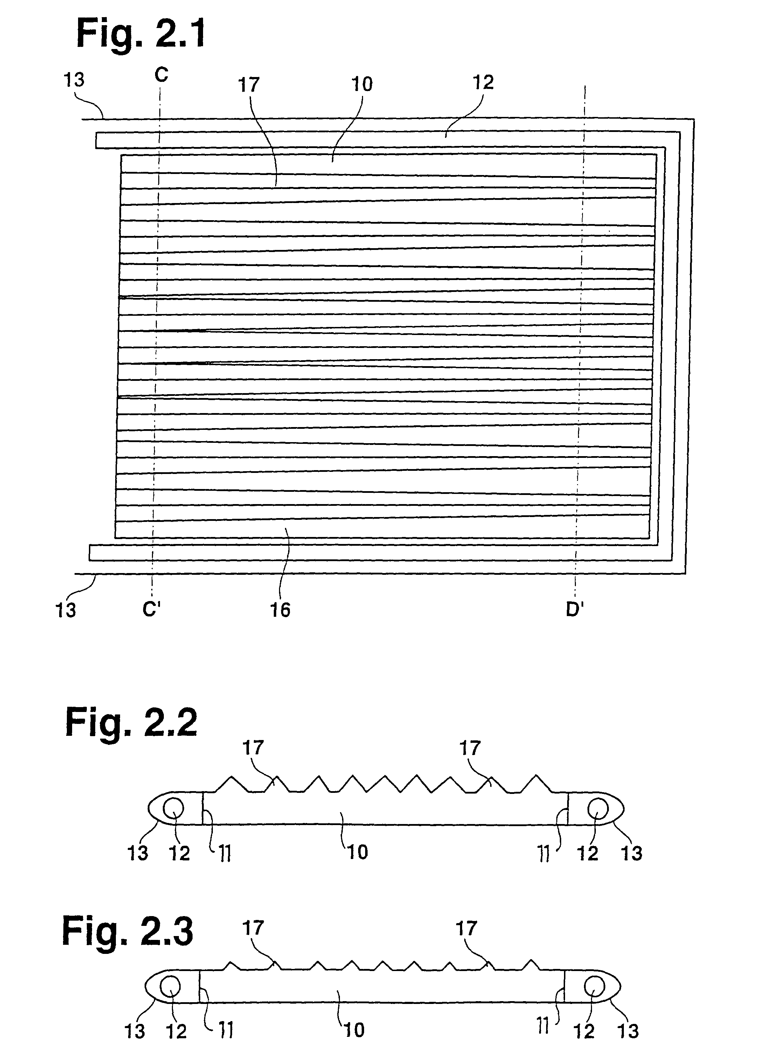

Ein weiteres Ausführungsbeispiel ist in den Figuren 2.1 bis 2.3 gezeigt. Figur 2.1 zeigt die Aufsicht auf eine Beleuchtungseinheit. Wiederum weist die Beleuchtungseinheit eine in etwa quaderförmige Wellenleiterplatte aus einem transparentem Material, beispielsweise Plexiglas, auf. Wie in Figur 1.1 ist die Wellenleiterplatte 10 an drei ihrer Stirnseiten von einer Lichtquelle 12 umgeben, hinter welcher sich ein Reflektor 13 befindet. Die in Figur 2.1 sichtbare Unterseite 16 der Wellenleiterplatte 10 ist mit linearen Prismen 17 versehen, welche alle entlang der Längsachse (also parallel zu den beiden Schenkeln der U-förmigen Lichtquelle 12) angeordnet sind. Die Prismen 17 sind lineare Prismen, und weisen sowohl untereinander als auch längs ihrer Längsachse überall die gleiche Querschnittsform auf. Die Querschnittsfläche der Prismen variiert jedoch, sowohl zwischen den einzelnen Prismen als auch innerhalb eines Prismas entlang der Längsachse. Die Querschnittsfläche ist in der Mitte derjenigen Stirnfläche der Wellenleiterplatte 10, welche nicht mit einer Lichtquelle versehen ist, am größten und nimmt von dort aus in alle Richtungen kontinuierlich ab.

Dies wird auch in den beiden Querschnittszeichnungen in Figur 2.2 und Figur 2.3 illustriert.

Figur 2.2 zeigt eine Schnittzeichnung, durch die in Figur 2.1 dargestellte Beleuchtungseinheit entlang der ebenfalls in Figur 2.1 dargestellten Schnittlinie C'C, wobei gleiche Bestandteile mit den gleichen Bezugszeichen versehen wurden.

In Figur 2.3 ist ein weiterer Schnitt durch die in Figur 2.1 dargestellte Beleuchtungseinheit gezeigt, in diesem Falle entlang der Schnittlinien DD', welche ebenfalls in Figur 2.1 wiedergegeben ist.

Zur Funktionsbeschreibung der in Figur 2.1 dargestellten Beleuchtungseinheit wird auf die Beschreibung der in Figur 1.1 dargestellten Beleuchtungseinheit verwiesen. Wiederum wird das von der Beleuchtungseinheit abgestrahlte Licht dadurch homogenisiert, daß die Auskopplungseffizienz aus der Wellenleiterplatte 10 dort am größten ist, wo die Lichtintensität am kleinsten ist. In der in Figur 2.1 gezeigten Beleuchtungseinheit wird jedoch die Auskopplungseffizienz nicht durch die Zahl der Prismen sondern durch die Abmessungen der Prismen bestimmt, wobei die Effizienz der Auskopplung mit größerer Querschnittsfläche der Prismen steigt. Hierbei ist jedoch zu berücksichtigen, daß die Auskopplungseffizienz in einen Sättigungsbereich eintritt, wenn sich benachbarte Prismen überschneiden.

Es ist vorteilhaft, wenn die Anordnung der Prismen wenigstens die gleichen Symmetrieelemente aufweist wie die Lampe, der Reflektor und die Wellenleiterplatte ohne Prismen. In diesem Fall läßt sich mit relativ geringem Aufwand ein hoher Grad an Homogenität des ausgestrahlten Lichts erreichen. Es ist jedoch auch möglich eine asymmetrische Prismenanordnung, insbesondere bezüglich der Längsachse der Beleuchtungseinheit, zu wählen. In diesem Fall ist auch die Intensitätsverteilung des von der Beleuchtungseinheit ausgestrahlten Lichts nicht vollständig homogen. Es ist möglich und vorgesehen, auf diese Weise gezielt Inhomogenitäten zu erzeugen, welche die von der Lichtquelle 12 erzeugten Inhomogenitäten ersetzt. Ebenso ist es aber auch möglich und vorgesehen, durch eine geeignete Wahl der Querschnittsflächen die asymmetrische Verteilung der Prismen so auszugleichen, daß die Beleuchtungseinheit wiederum homogenes Licht ausstrahlt.

Weiterhin ist es möglich und vorgesehen, die Prismen 17 als Prismen auszubilden, deren Firstlinien gebogen sind.

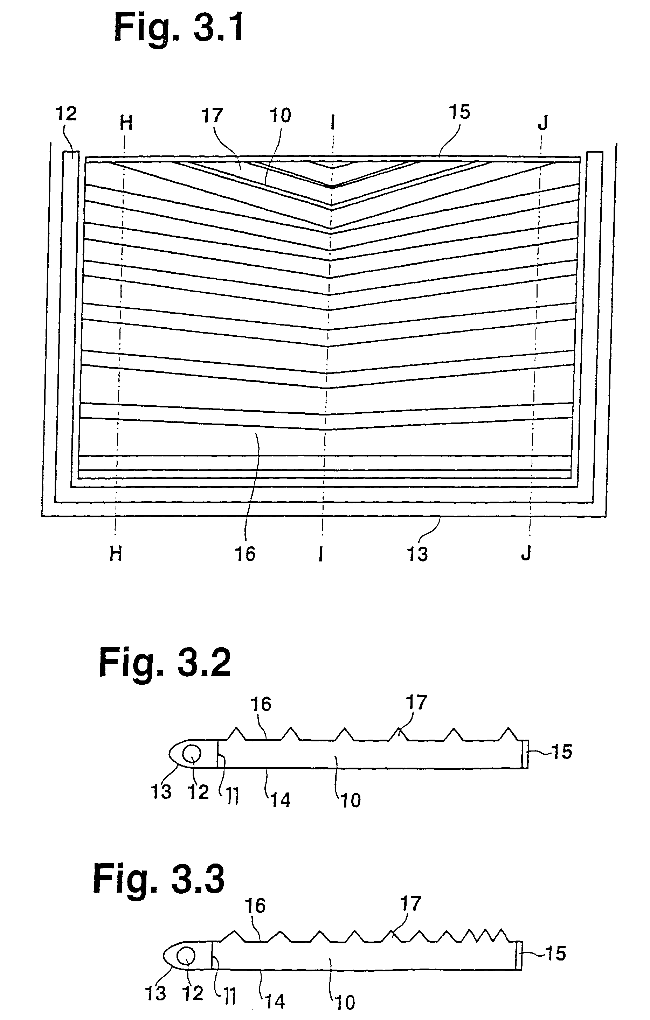

Ein weiteres Ausführungsbeispiel ist in den Figuren 3.1 bis 3.3 gezeigt. Figur 3.1 zeigt die Aufsicht auf eine Beleuchtungseinheit. Wiederum weist die Beleuchtungseinheit eine in etwa quaderförmige Wellenleiterplatte 10 aus einem transparentem Material, beispielsweise Plexiglas, auf. Wie in Figur 1.1 ist die Wellenleiterplatte 10 an drei ihrer Stirnseiten von einer Lichtquelle 12 umgeben, hinter welcher sich ein Reflektor 13 befindet. Im Unterschied zu den vorhergehenden Figuren umfaßt die Lichtquelle 12 ine lange und zwei kurze Seiten der Wellenleiterplatte 10. Die in Figur 3.1 sichtbare Unterseite 16 der Wellenleiterplatte 10 ist mit Prismen 17 versehen, deren Firstlinien V-förmig sind, wobei die Spiegelachsen der Prismen deckunsgleich zu der Längsachse (also parallel zu den beiden Schenkeln der U-förmigen Lichtquelle 12) der Lichtquelle 12 angeordnet sind. Die Prismen 17 weisen sowohl untereinander als auch längs ihrer Längsachse (mit Ausnahme des Knickbereichs, in welchem die Querschnittsform komplexer ist) überall die gleiche Querschnittsform und Querschnittsfläche auf.

Der Abstand zwischen den Prismen ist in dem Bereich der Wellenleiterplatte 10, der am weitesten von der Lichtquelle 12 entfernt ist, kleiner.

Dies wird auch in den beiden Querschnittszeichnungen in Figur 3.2 und Figur 3.3 illustriert.

Figur 3.2 zeigt eine Schnittzeichnung, durch die in Figur 3.1 dargestellte Beleuchtungseinheit entlang der ebenfalls in Figur 3.1 dargestellten Schnittlinie HH', wobei gleiche Bestandteile mit den gleichen Bezugszeichen versehen wurden.

In Figur 3.3 ist ein weiterer Schnitt durch die in Figur 3.1 dargestellte Beleuchtungseinheit gezeigt, in diesem Falle entlang der Schnittlinien II', welche ebenfalls in Figur 3.1 wiedergegeben ist.

Zur Funktionsbeschreibung der in Figur 3.1 dargestellten Beleuchtungseinheit wird auf die Beschreibung der in Figur 1.1 dargestellten Beleuchtungseinheit verwiesen. Wiederum wird das von der Beleuchtungseinheit abgestrahlte Licht dadurch homogenisiert, daß die Auskopplungseffizienz aus der Wellenleiterplatte 10 dort am größten ist, wo die Lichtintensität am kleinsten ist. Wie schon in dem in Figur 1.1 gezeigten Ausführungsbeispiel wird die Auskopplungseffizienz durch Verringerung der Abstände zwischen den Prismen erhöht. Im Gegensatz zu dem in Figur 1.1 gezeigten Ausführungsbeispiel sind hier die Firstlinien der Prismen etwa senkrecht zu dem Gradienten (entlang den sogenannten Äquiintensitätslinien) der Lichtintensität in der Wellenleiterplatte 10 angeordnet, wobei die Auskopplungsgoeffizienten entlang dem Gradienten durch Erhöhung der Prismendichte erhöht wird.

Es ist, in Abwandlung des Ausführungsbeispiels in Figur 3.1, vorstellbar und vorgesehen, die Firstlinien der Prismen gebogen vorzesehen, um eine engere Führung der Prismen entlang der Äquiintensitätslinien zu erreichen.

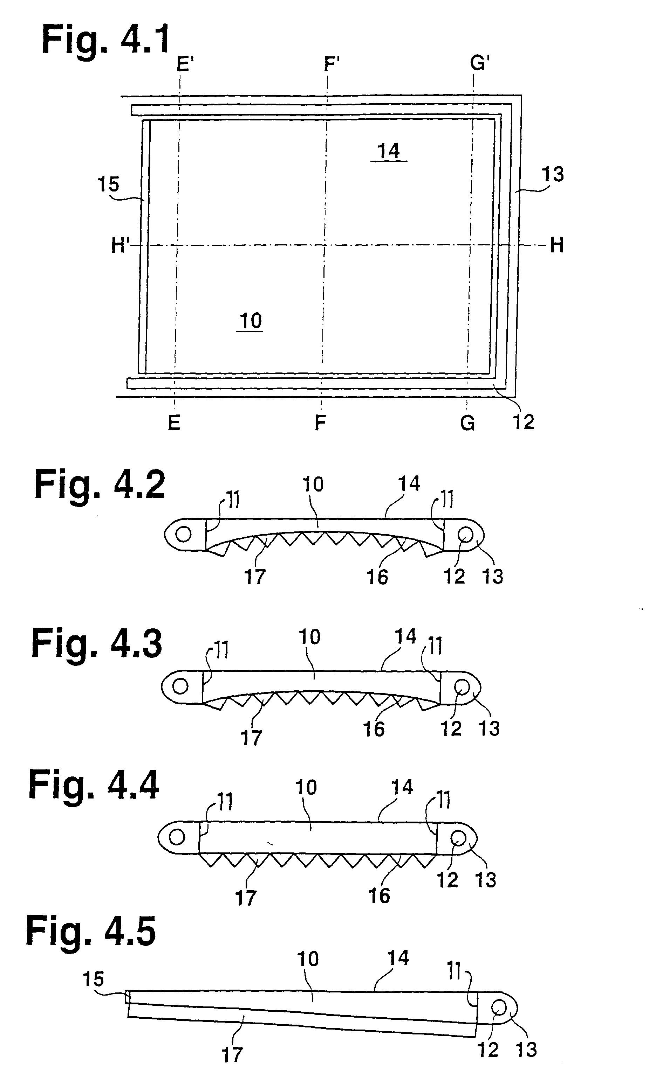

In Figur 4.1 ist ein weiteres Ausführungsbeispiel einer erfindungsgemäßen Beleuchtungseinheit in Aufsicht auf die Lichtaustrittsfläche 14 gezeigt. Die Beleuchtungseinheit weist wiederum eine in etwa quaderförmige Wellenleiterplatte 10 auf, welche aus transparentem Material gefertigt ist. Die Prismen 17 sind in dieser Darstellung nicht zu sehen, da sie sich auf der Unterseite befinden. Die Wellenleiterplatte 10 ist wiederum an drei Seiten von einer U-förmigen Lichtquelle 12 umgeben, welche wiederum von einem Reflektor 13 umgeben ist. An der Stirnseite der Wellenleiterplatte 10, welche nicht mit einer Lichtquelle 12 versehen ist, ist eine reflektierende Schicht 15 aufgebracht. Die in Figur 4.1 dargestellte Beleuchtungseinheit ist im folgenden in vier verschiedenen Schnitten dargestellt.

Figur 4.2 zeigt einen ersten Schnitt durch die in Figur 4.1 dargestellte Beleuchtungseinheit entlang der Schnittlinie EE', welche am nächsten an der reflektierenden Schicht 15 liegt.

Figur 4.3 zeigt einen Schnitt durch die in Figur 4.1 dargestellte Beleuchtungseinheit entlang der Schnittlinie FF', welche parallel zur Schnittlinie EE' verläuft und etwa in der Mitte der Wellenleiterplatte 10 angeordnet ist.

Figur 4.4 zeigt einen Schnitt entlang der Schnittlinie GG', welche ebenfalls parallel zur Schnittlinie EE' ist, jedoch nahe zum Rand der Wellenleiterplatte 10, beim Scheitel der U-förmigen Lichtquelle 12, verläuft.

In Figur 4.5 schließlich ist ein Schnitt entlang der Schnittlinie HH' dargestellt, wobei die Schnittlinie HH' mit der Längsachse der Beleuchtungseinheit zusammenfällt.

In allen Figuren ist eine Wellenleiterplatte 10 zu sehen, welche an ihren Stirnflächen mit einer Beleuchtungseinheit 12, welche teilweise von einem Reflektor 13 umgeben ist, versehen ist. Die nach oben zeigende Lichtaustrittsfläche 14 ist planar, wohingegen die Unterseite 16 der Wellenleiterplatte 10 nach innen gewölbt ist, so daß sich in den Figuren 4.2 bis 4.4 ein konkaver Querschnitt ergibt. Auf der Unterseite 16 der Wellenleiterplatte 10 sind Prismen 17 angeordnet, welche alle gleiche Querschnittsfläche und gleiche Querschnittsform aufweisen, und parallel zur Schnittlinie EE' verlaufen, also senkrecht zur Längsachse der Beleuchtungseinheit.

Die Wölbung der Wellenleiterplatte 10 ist so gewählt, daß die Wellenleiterplatte dort dünner ist, so die Lichtintensität etwas geringer ist. Somit wird das Licht in den Bereichen geringerer Lichtintensität gewissermaßen auf die Prismen 17 geführt, was wiederum zu einer erhöhten Auskopplungseffizienz führt.

Abwandlungsmöglichkeiten des in Figur 4.1 dargestellten Ausführungsbeispiel sind möglich und vorgesehen. So ist es beispielsweise vorgesehen, die Wellenleiterplatte 10 so auszubilden, daß die Wölbung auf der Lichtaustrittsfläche 14 aufgebracht ist und die Prismen auf Unterseite 16. Hierdurch ergibt sich eine einfacherer Herstellbarkeit der Wellenleiterplatte 10.

Ebenso ist es vorgesehen, die Prismen 17 auf der Wellenleiterplatte 10 um etwa 90 Grad zu verdrehen, so daß ihre Firstlinien in etwa senkrecht zur Längsachse der Beleuchtungseinheit 12 verlaufen.

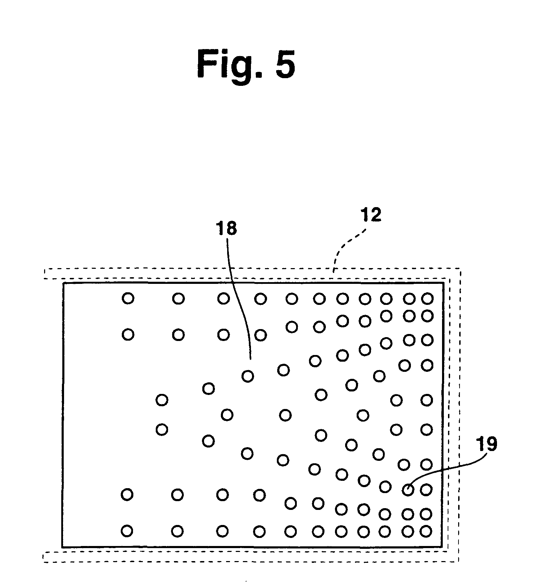

Durch Anbringen eines Spiegels unterhalb der Unterseite der Wellenleiterplatte 10 ist es möglich, mehr Licht von Lichtquelle zur Lichtaustrittsfläche zu richten. Figur 5 zeigt einen Spiegel 18, wie er zur Montage unter der Wellenleiterplatte 10 vorgesehen ist. Weiterhin ist in Figur 5 eine Lichtquelle 12 gestrichelt dargestellt, um die Einbaulage des Spiegels relativ zur Wellenleiterplatte und Lichtquelle zu verdeutlichen. Der Spiegel ist an einigen Punkten mit Schwärzungen versehen, welche die Reflektanz des Spiegels an diesem Punkt herabsetzen. Somit wird ebenfalls eine Verringerung der Auskopplungseffizienz erreicht. Werden die Schwärzungen an denjenigen Stellen angebracht, wo die Lichtintensität in der Wellenleiterplatte 10 besonders groß ist, erreicht mit der Schwärzung 19 eine Homogenisierung des ausgestrahlten Lichts.

Der Begriff Schwärzung in der oben verwandten Weise soll nicht nur das Aufbringen von schwarzer Farbe bezeichnen. Vielmehr bedeutet Schwärzung in diesem Zusammenhang eine Oberflächenbehandlung in geeigneter Weise, um die Reflektanz in den Punkten zu verringern. Dies kann beispielsweise durch Ätzen der Spiegeloberfläche, entfernen der Metallisierungsschicht des Spiegels, Aufbringen einer zusätzlichen Schicht, welche entweder absorbierend oder streuend oder als Antireflexionsschicht wirkt, erfolgen.

Weitere Abwandlungsmöglichkeiten der Erfindung ergeben sich durch Kombination der verschiedenen Ausführungsbeispiele. So ist es beispielsweise möglich und vorgesehen, eine doppeltparabolische Querschnittsform der Prismen auch in den in Figur 2.1 bis 4.5 gezeigten Ausführungsbeispielen zu verwenden, da sie eine Kollimation des ausgekoppelten Lichts ermöglicht. Ebenso kann auch eine gekrümmte Firstlinie benutzt werden, welche eine genauer einstellbare Homogenisierung des Lichts erlaubt.

Zur Verbesserung der Auskopplungseffizienz ist es vorgesehen, die Prismen zusätzlich mit einer Spiegelschicht zu versehen. Ebenso ist es möglich und vorgesehen, die Dachwinkel der Prismen so zu wählen, daß die Auskopplung unter der besonder effizienten Totalreflexion erfolgt. In diesem Fall ist es jedoch notwendig, das durch die Lichtaustrittsfläche austretende Licht parallel zur Flächennormalen auszurichten. Dies kann in einfacher Weise durch eine zusätzliche Folie, welche nach der Beleuchtungseinheit folgt, erfolgen.

Weiterhin ist es möglich und vorgesehen, eine L- oder O-förmige Lampe zu verwenden, oder auch Prismen auf der Lichtaustrittsfläche anzubringen.

Die Prismen auf der Lichtaustrittsfläche können mehrere Funktionen erfüllen. Einerseits setzen sie bei geeigneter Wahl der Mateialien und der Dachwinkel die Reflexion an der Lichtaustrittsfläche zurück in die Wellenleiterplatte herab und erhöhen somit die Effizienz der Auskopplung. Andererseits wird durch Lichtbrechung an den Seitenflächen der Prismen bewirkt, daß das Licht in einem gewünschten Ausmaß parallel gerichtet wird.

In bevorzugter Weise sind die Prismen auf der Lichtaustrittsfläche so angeordnet, daß ihre Firstlinien in etwa senkrecht auf den Firstlinien der auf der Unterseit angeordneten Prismen stehen. Ebenso ist es vorteilhaft und vorgesehen, daß auch die Prismen auf der Lichtaustrittsfläche mit variablem Querschnitt oder variabler Dichte in Analogie zu den auf der Unterseite angeordneten Prismen vorgesehen werden.

## Patentansprüche

1. Beleuchtungseinheit zur flächigen homogenen Ausleuchtung, mit einer Wellenleiterplatte (10), die wenigstens zwei Deckflächen (14,16) aufweist, wobei die Wellenleiterplatte wenigstens zwei Schmalseiten (11) aufweist, wobei eine Lichtquelle (12), insbesondere eine Kaltkathodenfloureszenzlampe, an wenigstens zwei benachbarten Schmalseiten angeordnet ist und Licht der Lichtquelle in die Wellenleiterplatte (10) optisch einkoppelbar ist, wobei die Wellenleiterplatte (10) auf mindestens einer Deckfläche (16, 14) mit Prismen (17) versehen ist, wobei eine größere Anzahl von Prismen pro Fläche und/oder größere Abmessungen der Prismen in den Bereichen der Wellenleiterplatte (10) vorgesehen sind, in denen die Intensität des Lichts, das in diesen Bereichen auskoppelbar ist, geringer ist.

2. Beleuchtungseinheit nach Anspruch 1, **dadurch gekennzeichnet, daß** die Lichtquelle (12) U-förmig ist.

3. Beleuchtungseinheit nach einem der vorhergehenden Ansprüche, **dadurch gekennzeichnet, daß** die Prismen (17) Längsachsen aufweisen.

4. Beleuchtungseinheit nach Anspruch 3, **dadurch gekennzeichnet, daß** jedes Prisma entlang der Längsachse eine gleichbleibende Querschnittsform aufweist.

5. Beleuchtungseinheit nach Anspruch 4, **dadurch gekennzeichnet, daß** alle Prismen (17) die gleiche Querschnittsform aufweisen.

6. Beleuchtungseinheit nach Anspruch 5, **dadurch gekennzeichnet, daß** die Prismen eine dreieckige Querschnittsform aufweisen, und daß alle Winkel des Dreiecks einen festgelegten Wert annehmen.

7. Beleuchtungseinheit nach Anspruch 6, **dadurch gekennzeichnet, daß** die Seitenlinien des Dreiecks gekrümmt, insbesondere parabolisch gekrümmt, sind.

8. Beleuchtungseinheit nach einem der Ansprüche 3-7, **dadurch gekennzeichnet, daß** die Längsachsen bereichsweise etwa parallel zur Richtung des Gradienten der Intensität des Lichts angeordnet sind.

9. Beleuchtungseinheit nach einem der Ansprüche 3-7, **dadurch gekennzeichnet, daß** die Längsachsen bereichsweise etwa senkrecht zur Richtung des Gradienten der Intensität des Lichts angeordnet sind.

10. Beleuchtungseinheit nach einem der Ansprüche 3-8, **dadurch gekennzeichnet, daß** die Längsachsen bereichsweise in etwa parallel angeordnet sind, und daß die Tiefe und/oder Breite der Prismen größer ist in den Bereichen der Wellenleiterplatte, in denen die Intensität des Lichts, das auskoppelbar ist, geringer ist.

11. Beleuchtungseinheit nach Anspruch 10, **dadurch gekennzeichnet, daß** die Längsachsen der Prismen (17) etwa parallel zu einer Symmetrieachse der Beleuchtungseinheit ausgerichtet sind.

12. Beleuchtungseinheit nach einem der vorhergehenden Ansprüche, **dadurch gekennzeichnet, daß** die Flächen der Prismen (17) mit einer spiegelnden Schicht versehen sind.

13. Beleuchtungseinheit zur flächigen homogenen Ausleuchtung, mit einer Wellenleiterplatte (10), die wenigstens zwei Deckflächen (14,16) aufweist, wobei die Wellenleiterplatte wenigstens zwei Schmalseiten (11) aufweist, wobei eine Lichtquelle (12), insbesondere eine Kaltkathodenfloureszenzlampe, an wenigstens zwei benachbarten Schmalseiten angeordnet ist und Licht der Lichtquelle in die Wellenleiterplatte (10) optisch einkoppelbar ist, wobei die Wellenleiterplatte (10) auf mindestens einer Deckfläche (16, 14) mit Prismen (17) versehen ist, wobei eine geringere Dicke der Wellenleiterplatte (10) in den Bereichen der Wellenleiterplatte (10) vorgesehen ist, in denen die Intensität des Lichts, das in diesen Bereichen auskoppelbar ist, geringer ist.

14. Beleuchtungseinheit nach Anspruch 13, **dadurch gekennzeichnet, daß** die Lichtquelle (12) U-förmig ist.

15. Beleuchtungseinheit nach einem der vorhergehenden Ansprüche, **dadurch gekennzeichnet, daß** zusätzlich zu den Prismen, die auf einer ersten Deckfläche vorgesehen sind, weitere Prismen auf einer zweiten Deckfläche angeordnet sind, die in etwa senkrecht zu den Prismen auf der ersten Deckfläche verlaufen, wobei das Licht der Lichtquelle die Wellenleiterplatte durch die zweite Deckfläche hindurch verläßt.

16. Beleuchtungseinheit nach Anspruch 15, **dadurch gekennzeichnet, daß** die Prismen auf der zweiten Deckfläche mit variablem Querschnitt oder mit variabler Dichte in Analogie zu den auf der ersten Deckfläche angeordneten Prismen angeordnet sind.

17. Beleuchtungseinheit zur flächigen homogenen Ausleuchtung, mit einer Wellenleiterplatte (10), die wenigstens zwei Deckflächen (14,16) aufweist, wobei die Wellenleiterplatte wenigstens zwei Schmalseiten (11) aufweist, wobei eine Lichtquelle (12), insbesondere eine Kaltkathodenfloureszenzlampe, an wenigstens zwei benachbarten Schmalseiten angeordnet ist und Licht der Lichtquelle in die Wellenleiterplatte (10) optisch einkoppelbar ist, wobei die Wellenleiterplatte (10) auf mindestens einer Deckfläche (16, 14) mit Prismen (17) versehen ist, wobei auf einer Deckfläche der Wellenleiterplatte (10) ein Spiegel (18) vorgesehen ist und wobei der Spiegel (18) dort eine geringere Reflektanz aufweist, wo er sich unter Bereichen der Wellenleiterplatte (10) befindet, in denen die Intensität des Lichts, das in diesem Bereich auskoppelbar ist, größer ist.

18. Beleuchtungseinheit nach Anspruch 17, **dadurch gekennzeichnet, daß** die Lichtquelle (12) U-förmig ist.

19. Beleuchtungseinheit nach einem der Ansprüche 17-18, **dadurch gekennzeichnet, daß** auf dem Spiegel (18) Punkte verringerter Reflektanz vorgesehen sind, die von Zonen hoher Reflektanz umgeben sind, und daß weniger Punkte dort vorgesehen sind, wo der Spiegel (18) sich unter Bereichen der Wellenleiterplatte (10) befindet, in denen die Intensität des Lichts geringer ist.

## Claims

1. Lighting unit for flat homogeneous illumination, having an optical conductor plate (10) which has at least two top surfaces (14, 16), the optical conductor plate having at least two narrow sides (11), a light source (12), in particular a cold cathode fluorescent lamp, being arranged on at least two neighbouring narrow sides, and it being possible for light from the light source to be launched optically into the optical conductor plate (10), the optical conductor plate (10) being provided with prisms (17) on at least one top surface (16, 14), a larger number of prisms per surface and/or larger dimensions of the prisms being provided in the regions of the optical conductor plate (10) in which the intensity of the light which can be coupled out is lower.

2. Lighting unit according to Claim 1, **characterized in that** the light source (12) is U-shaped.

3. Lighting unit according to one of the preceding claims, **characterized in that** the prisms (17) have longitudinal axes.

4. Lighting unit according to Claim 3, **characterized in that** each prism has a constant cross-sectional shape along the longitudinal axis.

5. Lighting unit according to Claim 4, **characterized in that** all the prisms (17) have the same cross-sectional shape.

6. Lighting unit according to Claim 5, **characterized in that** the prisms have a triangular cross-sectional shape, and **in that** all the angles of the triangle assume a fixed value.

7. Lighting unit according to Claim 6, **characterized in that** the sides of the triangle are curved, in particular parabolically curved.

8. Lighting unit according to one of Claims 3-7, **characterized in that** the longitudinal axes are arranged in part approximately parallel to the direction of the gradient of the intensity of the light.

9. Lighting unit according to one of Claims 3-7, **characterized in that** the longitudinal axes are arranged in part approximately perpendicular to the direction of the radiant of the intensity of the light.

10. Lighting unit according to one of Claims 3-8, **characterized in that** the longitudinal axes are arranged in part approximately parallel, and **in that** the depth and/or width of the prisms is greater in those regions of the optical conductor plate in which the intensity of the light which can be coupled out is lower.

11. Lighting unit according to Claim 10, **characterized in that** the longitudinal axes of the prisms (17) are aligned approximately parallel to an axis of symmetry of the lighting unit.

12. Lighting unit according to one of the preceding claims, **characterized in that** the surfaces of the prisms (17) are provided with a specular coating.

13. Lighting unit for flat homogeneous illumination, having an optical conductor plate (10) which has at least two top surfaces (14, 16), the optical conductor plate having at least two narrow sides (11), a light source (12), in particular a cold cathode fluorescent lamp, being arranged on at least two neighbouring narrow sides, and it being possible for light from the light source to be launched optically into the optical conductor plate (10), the optical conductor plate (10) being provided with prisms (17) on at least one top surface (16, 14) a lesser thickness of the optical conductor plate (10) being provided in those regions of the optical conductor plate (10) in which the intensity of the light which can be coupled out in these regions is lower,

14. Lighting unit according to Claim 13, **characterized in that** the light source (12) is U-shaped.

15. Lighting unit according to one of the preceding claims, **characterized in that** in addition to the prisms which are provided on a first top surface, there are arranged on a second top surface further prisms which run approximately perpendicular to the prisms on the first top surface, the light from the light source leaving the optical conductor plate through the second top surface.

16. Lighting unit according to Claim 15, **characterized in that** the prisms on the second top surface are arranged with a variable cross section or with a variable density by analogy with the prisms arranged on the first top surface.

17. Lighting unit for flat homogeneous illumination, having an optical conductor plate (10) which has at least two top surfaces (14, 16), the optical conductor plate having at least two narrow sides (11), a light source (12), in particular a cold cathode fluorescent lamp, being arranged on at least two neighbouring narrow sides, and it being possible for light from the light source to be launched optically into the optical conductor plate (10), the optical conductor plate (10) being provided with prisms (17) on at least one top surface (16, 14), a mirror (18) being provided on one top surface of the optical conductor plate (10), and the mirror (18) having a lower reflectance where it is located below regions of the optical conductor plate (10) in which the intensity of the light which can be coupled out in this region is higher. the light which can be coupled out in this region is higher.

18. Lighting unit according to Claim 17, **characterized in that** the light source (12) is U-shaped.

19. Lighting unit according to one of Claims 17-18, **characterized in that** provided on the mirror (18) are points of reduced reflectance which are surrounded by zones of high reflectance, and **in that** fewer points are provided where the mirror (18) is located below regions of the optical conductor plate (10) in which the intensity of the light is lower.

## Revendications

1. Unité d'éclairage pour fournir un éclairage homogène en surface, dans laquelle :
- une plaque guide d'ondes (10) présente au moins deux faces de couverture (14, 16) et au moins deux côtés étroits (11),
- une source lumineuse (12), en particulier une lampe fluorescente à cathode froide est montée sur au moins deux côtés étroits voisins, et sa lumière peut être couplée optiquement dans la plaque guide d'ondes (10), équipée de prismes (17) sur au moins une de ses faces de couverture (14, 16), et
- un nombre plus élevé de prismes par unité de surface et/ou des dimensions supérieures de ceux-ci sont prévus dans les zones de la plaque guide d'ondes (10) où l'intensité de la lumière découplée dans ces zones est plus faible.

2. Unité d'éclairage selon la revendication 1,
**caractérisée en ce que**
la source lumineuse (12) a la forme d'un U.

3. Unité d'éclairage selon l'une quelconque des revendications 1 ou 2,
**caractérisée en ce que**
les prismes (17) présentent des axes longitudinaux.

4. Unité d'éclairage selon la revendication 3,
**caractérisée en ce que**
chaque prisme présente le long de son axe longitudinal une section de forme constante.

5. Unité d'éclairage selon la revendication 4,
**caractérisée en ce que**
tous les prismes (17) ont en section la même forme.

6. Unité d'éclairage selon la revendication 5,
**caractérisée en ce que**
les prismes ont en section la forme d'un triangle dont tous les angles ont une valeur donnée.

7. Unité d'éclairage selon la revendication 6,
**caractérisée en ce que**
les côtés du triangle sont courbes, en particulier paraboliques.

8. Unité d'éclairage selon l'une quelconque des revendications 3 à 7,
**caractérisée en ce que**
les axes longitudinaux sont disposés, par zones, à peu près parallèlement à la direction du gradient de l'intensité de la lumière.

9. Unité d'éclairage selon l'une quelconque des revendications 3 à 7,
**caractérisée en ce que**
les axes longitudinaux sont disposés, par zones, à peu près perpendiculairement à la direction du gradient de l'intensité de la lumière.

10. Unité d'éclairage selon l'une quelconque des revendications 3 à 8,
**caractérisée en ce que**
les axes longitudinaux sont, par zones, à peu près parallèles entre eux, et la profondeur et/ou la largeur des prismes est plus grande dans les zones de la plaque guide d'ondes dans lesquelles l'intensité de la lumière découplée est plus faible.

11. Unité d'éclairage selon la revendication 10,
**caractérisée en ce que**
les axes longitudinaux des prismes (17) sont orientés à peu près parallèlement à l'axe de symétrie de l'unité d'éclairage.

12. Unité d'éclairage selon l'une quelconque des revendications précédentes,
**caractérisée en ce que**
les faces des prismes (17) sont recouvertes d'une couche réfléchissante.

13. Unité d'éclairage pour former un éclairage homogène en surface, dans laquelle :
- une plaque guide d'ondes (10) présente au moins deux faces de couverture (14, 16) et au moins deux côtés étroits (11),
- une source lumineuse (12), en particulier une lampe fluorescente à cathode froide est montée sur au moins deux côtés étroits voisins, et sa lumière peut être couplée optiquement dans la plaque (10) équipée de prismes (17) sur au moins une de ses faces de couverture (14, 16), et
- une épaisseur plus faible de la plaque guide d'ondes (10) est prévue dans les zones de cette plaque (10) dans lesquelles l'intensité de la lumière découplée dans ces zones est plus faible.

14. Unité d'éclairage selon la revendication 13,
**caractérisée en ce que**
la source lumineuse (12) a la forme d'un U.

15. Unité d'éclairage selon l'une quelconque des revendications précédentes,
**caractérisée en ce qu'**
en plus des prismes prévus sur une première face de couverture, il est prévu, sur une seconde face de couverture, d'autres prismes à peu près perpendiculaires à ceux de la première face, la lumière de la source lumineuse sortant de la plaque guide d'ondes à travers la seconde face de couverture.

16. Unité d'éclairage selon la revendication 15,
**caractérisée en ce que**
les prismes sur la seconde face de couverture ont une section variable ou une épaisseur variable, par analogie avec ceux situés sur la première face de couverture.

17. Unité d'éclairage pour former un éclairage homogène en surface, dans laquelle :
- une plaque guide d'ondes (10) présente au moins deux faces de couverture (14, 16) et au moins deux côtés étroits (11),
- une source lumineuse (12), en particulier une lampe fluorescente à cathode froide est montée sur au moins deux côtés étroits voisins, et sa lumière peut être couplée optiquement dans la plaque guide d'ondes (10) équipée de prismes (17) sur au moins une de ses faces de couverture (14, 16), et
- sur une face de couverture de la plaque guide d'ondes (10) est prévu un miroir (18) qui présente une réflectance plus faible là où ce miroir se trouve sous des zones de la plaque (10) dans lesquelles l'intensité de la lumière découplée dans ces zones est plus grande.

18. Unité d'éclairage selon la revendication 17,
**caractérisée en ce que**
la source lumineuse (12) a la forme d'un U.

19. Unité d'éclairage selon l'une quelconque des revendications 17 ou 18,
**caractérisée en ce que**
le miroir (18) présente des points à réflectance diminuée entourés de zones à réflectance élevée, et il y a moins de ces points là où le miroir (18) se trouve sous des zones de la plaque guide d'ondes (10) dans lesquelles l'intensité de la lumière est plus faible.
